# EUROPEAN PATENT APPLICATION

(11) **EP 2 202 831 A1**
(43) Date of publication of application: **30.06.2010**
(21) Application number: 08839988.6
(22) Date of filing: 14.10.2008
(51) Int. Cl.: H01M 4/92, H01M 4/96, H01M 8/02, H01M 8/10

(54) **SUPPORTED CATALYST FOR FUEL CELL AND FUEL CELLS**

(30) Priority: 15.10.2007 JP 2007268158
(71) Applicant: Cataler Corporation, Kakegawa-shi Shizuoka 437-1492 (JP); Toyota Jidosha Kabushiki Kaisha, Toyota-shi, Aichi 471-8571 (JP)
(72) Inventor: TABATA, Toshiharu c/o Cataler Corporation, Shizuoka 437-1492 (JP); TERADA, Tomoaki c/o Cataler Corporation, Shizuoka 437-1492 (JP); NAGATA, Takahiro c/o Cataler Corporation, Shizuoka 437-1492 (JP); KATAOKA, Mikihiro c/o Cataler Corporation, Shizuoka 437-1492 (JP); TAKAHASHI, Hiroaki, Aichi 471-8571 (JP); MIZUTANI, Nobuaki, Aichi 471-8571 (JP); HORIUCHI, Yousuke c/o Cataler Corporation, Shizuoka 437-1492 (JP)
(74) Representative: Luderschmidt, Schüler & Partner
(86) International application number: PCT/JP2008/068593
(87) International publication number: WO 2009/051111

(57) **Abstract**

The technology useful for the realization of a fuel cell that excels in not only the initial performance but also the post-endurance performance is provided. A supported catalyst for fuel cell includes a conductive carrier and platinum supported on the conductive carrier. A 90% particle diameter D₉₀ on a cumulative particle size curve obtained by determining a particle size distribution of the supported catalyst by a light scattering method is 28 µm or less.

## Description

### Technical Field

The present invention relates to a supported catalyst for fuel cell and a fuel cell.

### Background Art

Fuel cells are receiving wide attention as power sources that ensure high power generation efficiency and that can be easily miniaturized, and that have less adverse impact on the environment. In particular, solid-polymer fuel cells are being intensely studied as a form suitable for use in automobiles, etc., because they can operate at room temperature and can realize a high output density.

The solid-polymer fuel cells generate an electromotive force by a combination of the oxidation reaction of hydrogen at their anode with the reduction reaction of oxygen at their cathode. Accordingly, for enhancing the performance of the solid-polymer fuel cells, it is necessary to efficiently accomplish the above reactions.

From this viewpoint, an anode and/or cathode catalyst layer containing a catalyst metal, such as platinum, is used in the solid-polymer fuel cell so as to increase the efficiency of the above reactions and thus enhance the performance of the cell. For example, JP 2002-15745 A describes a solid-polymer fuel cell comprising an anode and/or cathode catalyst layer containing a carbon carrier on which platinum or a platinum alloy is supported.

Meanwhile, in the solid-polymer fuel cell, the catalyst components, electrolytic solutions, and the like may suffer degradation by the long-term use of the cell.

### Disclosure of Invention

In this situation, it is desired to develop the technology for providing a fuel cell that excels in both the initial performance and the performance after long-term use (hereinafter referred to as post-endurance performance).

Accordingly, an object of the present invention is to provide the technology useful for the realization of a fuel cell that excels in not only the initial performance but also the post-endurance performance.

According to a first aspect of the present invention, there is provided a supported catalyst for fuel cell, comprising a conductive carrier and platinum supported on the conductive carrier, wherein a 90% particle diameter D₉₀ on a cumulative particle size curve obtained by determining a particle size distribution of the supported catalyst by a light scattering method is 28 µm or less.

According to a second aspect of the present invention, there is provided a fuel cell comprising a catalyst layer containing the catalyst according to the first aspect as an anode catalyst layer and/or a cathode catalyst layer.

### Brief Description of Drawings

FIG. 1 is a sectional view schematically showing a fuel cell according to one embodiment of the present invention.
FIG. 2 is a graph showing an example of particle size distribution curve obtained by determining the particle size distribution of a supported catalyst by a light scattering method.
FIG. 3 is a graph showing a cumulative particle size curve obtained from the particle size distribution curve of FIG. 2.
FIG. 4 is a graph showing an example of the relationship between the 90% particle diameter D₉₀ of supported catalysts and the cell voltage of single cells containing the supported catalysts at the initial stage of the use.
FIG. 5 is a graph showing an example of the relationship between the 90% particle diameter D₉₀ of supported catalysts and the cell voltage of single cells containing the supported catalysts after the duration test.
FIG. 6 is a graph showing an example of the relationship between the density of supported platinum of supported catalysts and the cell voltage of single cells containing the supported catalysts at the initial stage of the use.
FIG. 7 is a graph showing an example of the relationship between the density of supported platinum of supported catalysts and the cell voltage of single cells containing the supported catalysts after the duration test.

Best Mode for Carrying Out the Invention Referring to the drawings, embodiments of the present invention will be described in detail below.

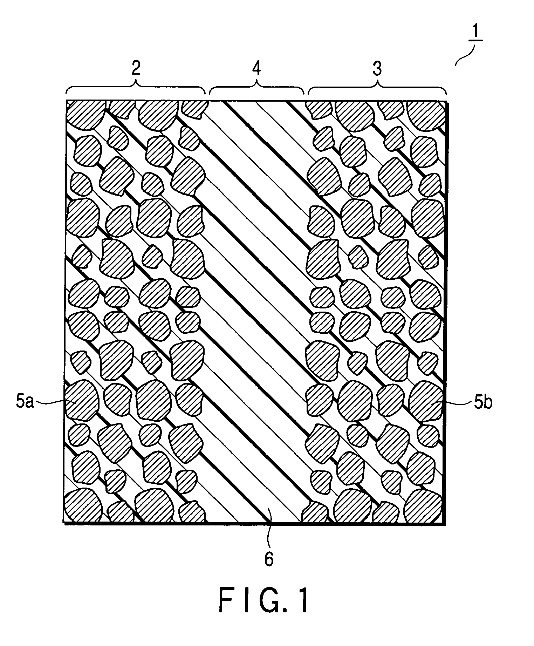

FIG. 1 is a sectional view schematically showing a fuel cell according to one embodiment of the present invention. FIG. 1 shows a membrane-electrode assembly for solid-polymer fuel cell as an example.

The membrane-electrode assembly 1 includes an anode catalyst layer 2, a cathode catalyst layer 3, and a proton-conducting solid electrolyte layer 4 interposed therebetween and containing a proton-conducting solid electrolyte.

The anode catalyst layer 2 contains a supported catalyst 5a and a proton-conducting solid electrolyte 6. The cathode catalyst layer 3 contains a supported catalyst 5b and a proton-conducting solid electrolyte 6. Further, the proton-conducting solid electrolyte layer 4 contains a proton-conducting solid electrolyte 6.

When gaseous hydrogen is fed from the side of the anode catalyst layer 2 and simultaneously oxygen or air is fed to the side of the cathode catalyst layer 3, the membrane-electrode assembly 1 generates an electromotive force between the anode catalyst layer 2 and the cathode catalyst layer 3. More specifically, on the anode catalyst layer 2, hydrogen molecules are oxidized by the catalytic action of platinum or a platinum alloy to thereby produce protons and electrons. The thus produced electrons move through a conductive carrier, such as a carbon carrier, as a conductor channel and are taken out from the anode catalyst layer 2 to an external circuit. The thus produced protons move from the anode catalyst layer 2 via the proton-conducting solid electrolyte layer 4 to the cathode catalyst layer 3. The protons having arrived at the cathode catalyst layer 3 react by the catalytic action of platinum or a platinum alloy with oxygen molecules and electrons fed from the external circuit via a carbon carrier or the like as a conductor channel to thereby produce water. This membrane-electrode assembly 1 generates an electrical energy from gaseous hydrogen and gaseous oxygen by utilization of such phenomena.

The supported catalyst 5a contained in the anode catalyst layer 2 and/or the supported catalyst 5b contained in the cathode catalyst layer 3 are/is, for example, conductive carrier supporting platinum or a platinum alloy as a platinum catalyst. When a platinum alloy is used as the platinum catalyst, the platinum alloy may be composed of, for example, platinum and a member selected from among iron, manganese, cobalt, aluminum, copper, chromium, palladium, tungsten, iridium, gold, rhodium, ruthenium and the like. As the conductive carrier, use can be made of, for example, a carbon carrier being made of a carbonaceous material. As the carbonaceous material, use can be made of, for example, graphite, active carbon, carbon black, carbon nanotubes or a combination thereof. In particular, it is preferred to use carbon black as the carbonaceous material.

A 90% particle diameter D₉₀ of at least one of the supported catalysts 5a and 5b is 28 µm or less.

Now, explanations on the "90% particle diameter D₉₀" will be described.

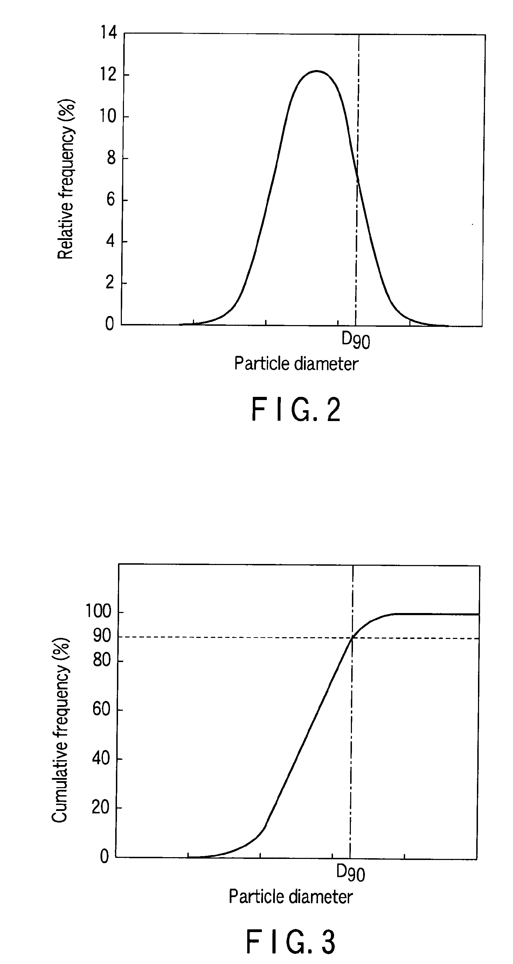

FIG. 2 is a graph showing an example of particle size distribution curve obtained by determining the particle size distribution of a supported catalyst by a light scattering method. FIG. 3 is a graph showing a cumulative particle size curve obtained from the particle size distribution curve of FIG. 2. In FIG. 2, the abscissa is the particle diameter of the supported catalyst, and the ordinate is the relative frequency of each particle diameter. In FIG. 3, the abscissa is the particle diameter of the supported catalyst, and the ordinate is the cumulative frequency of each particle diameter.

On the cumulative particle size curve of FIG. 3, the "90% particle diameter D₉₀" means the particle diameter of supported catalyst at which the cumulative frequency is 90%.

The greater the 90% particle diameter D₉₀, the less smooth the anode catalyst layer 2 and/or cathode catalyst layer 3 becomes. Accordingly, a local stress applies to the interface between the anode catalyst layer 2 and/or cathode catalyst layer 3 and the proton-conducting solid electrolyte layer 4, thereby causing the proton-conducting solid electrolyte layer 4 to sustain damage. That is, the post-endurance performance of the fuel cell may become poorer. Also, the greater the 90% particle diameter D₉₀, the more likely the aggregation of supported catalyst particles occurs. Accordingly, the contact between the platinum or platinum alloy contained in the supported catalyst 5a and/or 5b and substrate molecules such as hydrogen or oxygen becomes more difficult, thereby causing the catalytic activity to become poorer. That is, the initial performance and/or post-endurance performance of the fuel cell may become poorer. Therefore, the 90% particle diameter D₉₀ is set to 28 µm or less. The 90% particle diameter D₉₀ is greater than 0 µm and is, for example, greater than 1 µm.

The supported catalyst may be contained in either the anode catalyst layer 2 or the cathode catalyst layer 3 only, or may be contained in both of the anode catalyst layer 2 and the cathode catalyst layer 3.

As the supported catalyst, use can be made of, for example, the one produced by the following method.

First, by a wet process, a particulate conductive carrier is allowed to support platinum. Specifically, an aqueous solution of a platinum compound, such as a salt containing platinum, is dropped into a dispersion obtained by dispersing a conductive carrier such as a carbon carrier in water. The resultant dispersion is filtered and washed, and the obtained filtration cake is re-dispersed in water. A solution of a reducing agent, such as sodium borohydride or the like, is dropped into the dispersion, thereby causing platinum to precipitate (metallize) on the conductive carrier. Thereafter, the mixture is filtered and washed.

The thus obtained conductive carrier having platinum supported thereon is heated so as to dry the same. The powder obtained by the drying is comminuted in an inert atmosphere until the 90% particle diameter D₉₀ thereof reaches a desired value. The supported catalyst is obtained by the stated process.

It is preferred for the amount of supported platinum in the supported catalysts 5a and 5b to fall within the range of about 38 to about 90 mass%, especially about 45 to about 80 mass%. The initial performance (initial cell voltage) and/or post-endurance performance (post-endurance cell voltage) of the fuel cell can be further enhanced by causing the amount of supported platinum to fall within the above range.

The proton-conducting solid electrolyte 6 contained in each of the anode catalyst layer 2, cathode catalyst layer 3 and proton-conducting solid electrolyte layer 4 contains, for example, water. As the proton-conducting solid electrolyte 6, use can be made of, for example, a proton-conducting solid electrolyte having an -SO₃- group. As such a proton-conducting solid electrolyte, use can be made of, for example, perfluorosulfonic acid ionomers typified by Nafion (registered trademark). In the membrane-electrode assembly 1 shown in FIG. 1, a common proton-conducting solid electrolyte 6 may be used in the anode catalyst layer 2, cathode catalyst layer 3 and proton-conducting solid electrolyte layer 4. Alternatively, different types of proton-conducting solid electrolytes 6 may be used in each of these layers.

### EXAMPLE

Examples of the present invention will be described below, which however in no way limit the scope of the present invention.

### (Example 1)

Commercially available carbon powder of about 1000 m²/g specific surface area amounting to 3.5 g was dispersed in 0.2 L of pure water. Subsequently, an aqueous solution of hexahydroxoplatinum nitrate containing 6.5 g of platinum was dropped into the dispersion. The thus obtained solution was satisfactorily agitated, and 1 L of pure water was dropped thereinto and filtered. The thus obtained filtration cake was washed with pure water, and homogeneously re-dispersed in 1 L of pure water. An aqueous solution containing 4 g of sodium borohydride as a reducing agent was dropped into the dispersion, thereby precipitating platinum on carbon particles.

The resultant dispersion was filtered and washed with pure water. The thus obtained powder was dried at 80°C for 48 hours. The dried powder was comminuted in an inert atmosphere until the 90% particle diameter D₉₀ thereof reached 10 µm. The 90% particle diameter D₉₀ was determined by measuring the particle size distribution by means of an analyzer LA-500 manufactured by Shimadzu Corporation. The carbon powder having platinum supported thereon is hereinafter referred to as "catalyst powder A."

The density of supported platinum of catalyst powder A was 65 mass%. The average particle diameter of catalyst powder A was found to be 2.8 nm from the half-value width of the peak corresponding to Pt (111) face on the X-ray diffraction (XRD) spectrum thereof. The amount of CO adsorbed and BET specific surface area of catalyst powder A were 25 mL/g-Pt and 250 m²/g, respectively.

Using catalyst powder A, a single cell for solid-polymer fuel cell was fabricated in the following manner. First, catalyst powder A was dispersed in an organic solvent, and the obtained dispersion was applied onto a sheet of Teflon (registered trademark) so as to obtain anode and cathode catalyst layers. The amount of platinum catalyst per square centimeter of electrode thereof was 0.4 mg. Subsequently, these electrodes were stuck to each other via Nafion (registered trademark) by means of a hot press. Further, diffusion zones were provided on both sides thereof. Thus, a single cell was obtained. Hereinafter, this single cell is referred to as "single cell A."

### (Example 2)

A carbon powder having platinum supported thereon was produced in the same manner as in Example 1 except that the dried powder was comminuted until the 90% particle diameter D₉₀ reached 15 µm in place of 10 µm. This carbon powder having platinum supported thereon is hereinafter referred to as "catalyst powder B."

With respect to catalyst powder B, the density of supported platinum was 65 mass%, the average particle diameter 2.8 nm, the amount of CO adsorbed 25 mL/g-Pt, and the BET specific surface area 250 m²/g.

Thereafter, a single cell was fabricated in the same manner as in Example 1 except that catalyst powder B was used in place of catalyst powder A. Hereinafter, this single cell is referred to as "single cell B."

### (Example 3)

A carbon powder having platinum supported thereon was produced in the same manner as in Example 1 except that the dried powder was comminuted until the 90% particle diameter D₉₀ reached 20 µm in place of 10 µm. This carbon powder having platinum supported thereon is hereinafter referred to as "catalyst powder C."

With respect to catalyst powder C, the density of supported platinum was 65 mass%, the average particle diameter 2.8 nm, the amount of CO adsorbed 25 mL/g-Pt, and the BET specific surface area 250 m²/g.

Thereafter, a single cell was fabricated in the same manner as in Example 1 except that catalyst powder C was used in place of catalyst powder A. Hereinafter, this single cell is referred to as "single cell C."

### (Example 4)

A carbon powder having platinum supported thereon was produced in the same manner as in Example 1 except that the dried powder was comminuted until the 90% particle diameter D₉₀ reached 25 µm in place of 10 µm. This carbon powder having platinum supported thereon is hereinafter referred to as "catalyst powder D."

With respect to catalyst powder D, the density of supported platinum was 65 mass%, the average particle diameter 2.8 nm, the amount of CO adsorbed 25 mL/g-Pt, and the BET specific surface area 250 m²/g.

Thereafter, a single cell was fabricated in the same manner as in Example 1 except that catalyst powder D was used in place of catalyst powder A. Hereinafter, this single cell is referred to as "single cell D."

### (Example 5: Comparative Example)

A carbon powder having platinum supported thereon was produced in the same manner as in Example 1 except that the dried powder was comminuted until the 90% particle diameter D₉₀ reached 30 µm in place of 10 µm. This carbon powder having platinum supported thereon is hereinafter referred to as "catalyst powder E."

With respect to catalyst powder E, the density of supported platinum was 65 mass%, the average particle diameter 2.8 nm, the amount of CO adsorbed 25 mL/g-Pt, and the BET specific surface area 250 m²/g.

Thereafter, a single cell was fabricated in the same manner as in Example 1 except that catalyst powder E was used in place of catalyst powder A. Hereinafter, this single cell is referred to as "single cell E."

### (Example 6)

A carbon powder having platinum supported thereon was produced in the same manner as in Example 2 except that 6.5 g of carbon powder and a solution of hexahydroxoplatinum nitrate containing 3.5 g of platinum was used. This carbon powder having platinum supported thereon is hereinafter referred to as "catalyst powder F."

With respect to catalyst powder F, the density of supported platinum was 35 mass%, the average particle diameter 1.8 nm, the amount of CO adsorbed 39 mL/g-Pt, and the BET specific surface area 320 m²/g.

Thereafter, a single cell was fabricated in the same manner as in Example 1 except that catalyst powder F was used in place of catalyst powder A. Hereinafter, this single cell is referred to as "single cell F."

### (Example 7)

A carbon powder having platinum supported thereon was produced in the same manner as in Example 2 except that 5.0 g of carbon powder and a solution of hexahydroxoplatinum nitrate containing 5.0 g of platinum was used. This carbon powder having platinum supported thereon is hereinafter referred to as "catalyst powder G."

With respect to catalyst powder G, the density of supported platinum was 45 mass%, the average particle diameter 2.7 nm, the amount of CO adsorbed 29 mL/g-Pt, and the BET specific surface area 290 m²/g.

Thereafter, a single cell was fabricated in the same manner as in Example 1 except that catalyst powder G was used in place of catalyst powder A. Hereinafter, this single cell is referred to as "single cell G."

### (Example 8)

A carbon powder having platinum supported thereon was produced in the same manner as in Example 2 except that 1.5 g of carbon powder and a solution of hexahydroxoplatinum nitrate containing 8.5 g of platinum was used. This carbon powder having platinum supported thereon is hereinafter referred to as "catalyst powder H."

With respect to catalyst powder H, the density of supported platinum was 85 mass%, the average particle diameter 3.1 nm, the amount of CO adsorbed 18 mL/g-Pt, and the BET specific surface area 190 m²/g.

Thereafter, a single cell was fabricated in the same manner as in Example 1 except that catalyst powder H was used in place of catalyst powder A. Hereinafter, this single cell is referred to as "single cell H."

### (Example 9)

A carbon powder having platinum supported thereon was produced in the same manner as in Example 2 except that 1.0 g of carbon powder and a solution of hexahydroxoplatinum nitrate containing 9.0 g of platinum was used. This carbon powder having platinum supported thereon is hereinafter referred to as "catalyst powder I."

With respect to catalyst powder I, the density of supported platinum was 90 mass%, the average particle diameter 3.5 nm, the amount of CO adsorbed 13 mL/g-Pt, and the BET specific surface area 160 m²/g.

Thereafter, a single cell was fabricated in the same manner as in Example 1 except that catalyst powder I was used in place of catalyst powder A. Hereinafter, this single cell is referred to as "single cell I."

### (Example 10)

A carbon powder having platinum supported thereon was produced in the same manner as in Example 1 except that the dried powder was comminuted until the 90% particle diameter D₉₀ reached 1 µm in place of 10 µm. This carbon powder having platinum supported thereon is hereinafter referred to as "catalyst powder J."

With respect to catalyst powder J, the density of supported platinum was 65 mass%, the average particle diameter 2.8 nm, the amount of CO adsorbed 25 mL/g-Pt, and the BET specific surface area 250 m²/g.

Thereafter, a single cell was fabricated in the same manner as in Example 1 except that catalyst powder J was used in place of catalyst powder A. Hereinafter, this single cell is referred to as "single cell J."

The properties of the above-mentioned catalyst powders A to J are summarized in Table 1 below. As is apparent from the table, catalyst powders A to E and J exhibit an unvaried density of supported platinum of 65 mass% but exhibit different 90% particle diameters D₉₀. In contrast, catalyst powders B and F to I exhibit an unvaried 90% particle diameter D₉₀ of 15 µm but exhibit different supported platinum densities.

**Table 1**

| | Density of supported platinum (mass %) | Particle diameter (nm) | The amount of CO adsorbed (mL/g-Pt) | Specific surface area (m²/g) | 90% particle diameter D₉₀ (µm) |
|---|---|---|---|---|---|
| Powder A | 65 | 2.8 | 25 | 250 | 10 |
| Powder B | 65 | 2.8 | 25 | 250 | 15 |
| Powder C | 65 | 2.8 | 25 | 250 | 20 |
| Powder D | 65 | 2.8 | 25 | 250 | 25 |
| Powder E: Comparative Example | 65 | 2.8 | 25 | 250 | 30 |
| Powder F | 35 | 1.8 | 39 | 320 | 15 |
| Powder G | 45 | 2.7 | 29 | 290 | 15 |
| Powder H | 85 | 3.1 | 18 | 190 | 15 |
| Powder I | 90 | 3.5 | 13 | 160 | 15 |
| Powder J | 65 | 2.8 | 25 | 250 | 1 |

With respect to single cells A to J, the initial performance and the post-endurance performance was investigated. The results are summarized in Table 2, and detailed description will be given below. The expression "voltage drop ratio" appearing in Table 2 means the value obtained by calculating the quotient of the difference between initial cell voltage and cell voltage after the duration test divided by the initial cell voltage and multiplying the quotient by 100.

**Table 2**

| | Initial cell voltage (V) | Cell voltage after the duration test (V) | Voltage drop ratio (%) |
|---|---|---|---|
| Single cell A | 0.666 | 0.613 | 8.0 |
| Single cell B | 0.670 | 0.615 | 8.2 |
| Single cell C | 0.662 | 0.606 | 8.5 |
| Single cell D | 0.636 | 0.580 | 8.8 |
| Single cell E: Comparative Example | 0.530 | 0.448 | 15.5 |
| Single cell F | 0.552 | 0.468 | 15.2 |
| Single cell G | 0.639 | 0.583 | 8.8 |
| Single cell H | 0.634 | 0.578 | 8.8 |
| Single cell I | 0.580 | 0.513 | 11.6 |
| Single cell J | 0.640 | 0.586 | 8.4 |

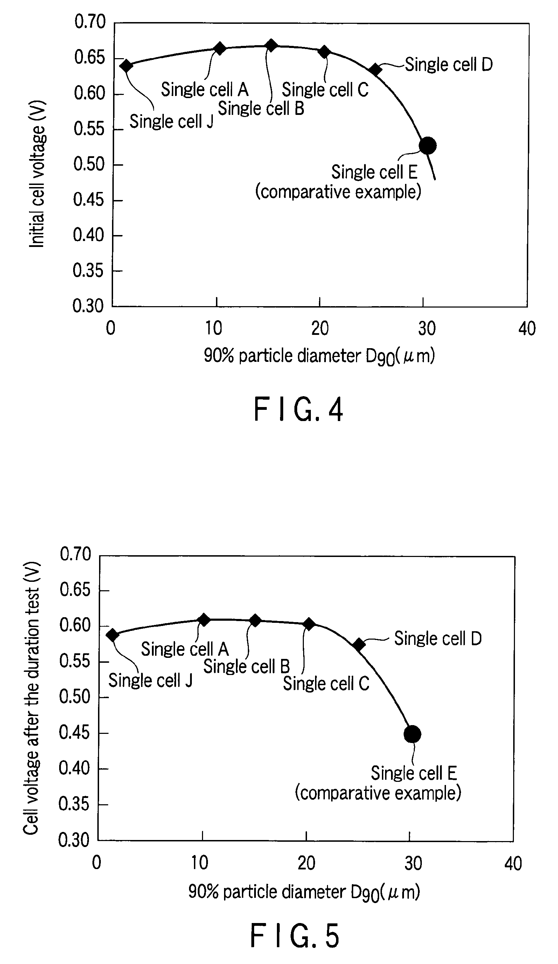

First, with respect to single cells A to E and J, the current-voltage (hereinafter referred to as I-V) performance at the initial stage of the use was investigated. The results are shown in FIG. 4.

In FIG. 4, the abscissa is the 90% particle diameter D₉₀ of the catalyst powder contained in each of the single cells, and the ordinate is the cell voltage at a current density of 1.0 A/cm² realized by the single cell at the initial stage of the use.

As is apparent from FIG. 4, single cells A to D and J exhibited initial cell voltages higher than that of single cell E. This attests to the enhancement of the initial performance of fuel cells by regulating the 90% particle diameter D₉₀ of supported catalyst powder to 28 µm or less.

The following duration test was performed in order to study the post-endurance performance of single cells A to E and J. Constant-voltage continuous operation at 0.6 V of each of the single cells was performed for 1000 hours while feeding humidified hydrogen having passed through a bubbler heated at 85°C to the anode side of the single cell at a flow rate of 0.5 L/min and feeding humidified air having passed through a bubbler heated at 70°C to the cathode side of the single cell at a flow rate of 1 L/min.

Thereafter, the I-V performance of each of single cells A to E and J was determined again. The results are shown in FIG. 5.

In FIG. 5, the abscissa is the 90% particle diameter D₉₀ of the catalyst powder contained in each of the single cells, and the ordinate is the cell voltage at a current density of 1.0 A/cm² realized by the single cell after the duration test thereof.

As is apparent from FIG. 5, single cells A to D and J exhibited post-endurance cell voltages higher than that of single cell E. This attests to the enhancement of the post-endurance performance of fuel cells by regulating the 90% particle diameter D₉₀ of supported catalyst powder to 28 µm or less.

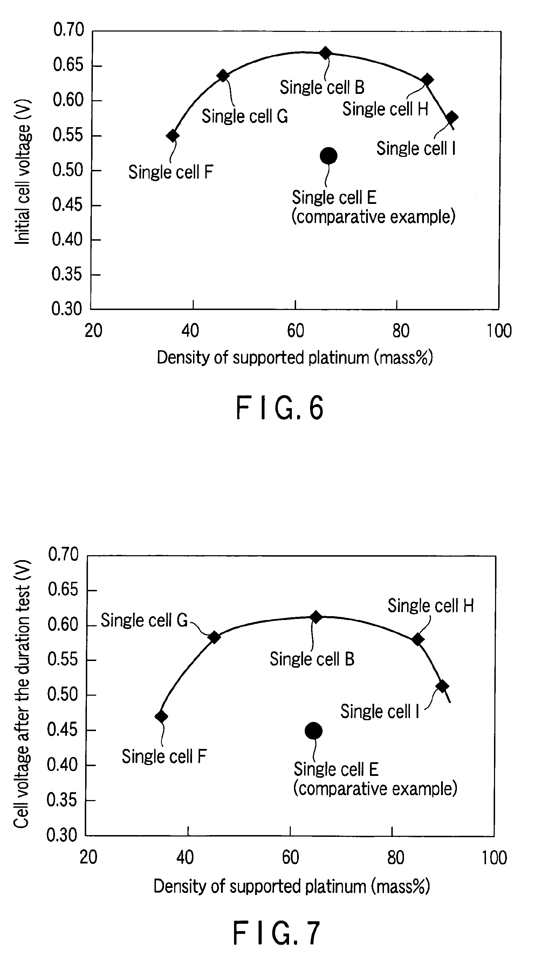

Further, the I-V performance of each of single cells F to I at the initial stage of the use thereof was investigated. The measurement results for the cell voltage at a current density of 1.0 A/cm² thereof together with those of single cells B and E are shown in FIG. 6.

In FIG. 6, the abscissa is the density of supported platinum of the catalyst powder contained in each of the single cells, and the ordinate is the cell voltage at a current density of 1.0 A/cm² realized by the single cell at the initial stage of the use.

As is apparent from FIG. 6, single cells B and F to I exhibited initial cell voltages higher than that of single cell E. This attests to the enhancement of the initial performance of fuel cells by reducing the 90% particle diameter D₉₀ of supported catalyst powder.

From the measurement results as for single cells B and F to I, it has been found that it is preferred for the density of supported platinum of the supported catalyst to fall within the range of about 38 to about 90 mass%, especially about 45 to about 80 mass%. Moreover, from a comparison between single cell E and single cell F, it has become apparent that an excellent initial performance can be realized even at a lower density of supported platinum by reducing the 90% particle diameter D₉₀ of supported catalyst.

Still further, the post-endurance performance of each of single cells F to I was investigated in the same manner as described above with respect to single cells A to E. The measurement results for the cell voltage at a current density of 1.0 A/cm² thereof together with those of single cells B and E are shown in FIG. 7.

In FIG. 7, the abscissa is the density of supported platinum of the catalyst powder contained in each of the single cells, and the ordinate is the cell voltage at a current density of 1.0 A/cm² realized by the single cell after the duration test.

As is apparent from FIG. 7, single cells B and F to I exhibited post-endurance cell voltages higher than that of single cell E. This attests to the enhancement of the post-endurance performance of fuel cells by reducing the 90% particle diameter D₉₀ of supported catalyst powder.

From the measurement results as for single cells B and F to I, it has been found that it is preferred for the density of supported platinum of the supported catalyst to fall within the range of about 38 to about 90 mass%, especially about 45 to about 80 mass%. Moreover, from a comparison between single cell E and single cell F, it has become apparent that an excellent post-endurance performance can be realized even at a lower density of supported platinum by reducing the 90% particle diameter D₉₀ of supported catalyst.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general inventive concept as defined by the appended claims and their equivalents.

## Claims

1. A supported catalyst for fuel cell, comprising:
a conductive carrier; and
platinum supported on the conductive carrier,
wherein a 90% particle diameter D₉₀ on a cumulative particle size curve obtained by determining aparticle size distribution of the supported catalyst by a light scattering method is 28 µm or less.

2. The catalyst according to claim 1, having a platinum within a range of 38 to 90 mass%.

3. The catalyst according to claim 1 or 2, wherein the conductive carrier is made of a carbonaceous material.

4. A fuel cell comprising a catalyst layer containing the catalyst according to any of claims 1 to 3 as an anode catalyst layer and/or a cathode catalyst layer.
